# EUROPEAN PATENT APPLICATION

(11) **EP 4 693 073 A1**
(43) Date of publication of application: **11.02.2026**
(21) Application number: 24193858.8
(22) Date of filing: 09.08.2024
(51) Int. Cl.: G06F 16/84, G06F 16/906, G06N 3/00

(54) **GENERATING A SEMANTIC MODEL OF A TECHNICAL PROCESS OR TECHNICAL UNIT**

(71) Applicant: Siemens Aktiengesellschaft, 80333 München (DE)
(72) Inventor: Haderlein-Høgberg, Veronika, 82041 Oberhaching (DE); Hubauer, Thomas, 85748 Garching bei München (DE); Lamparter, Steffen, 85622 Feldkirchen (DE); Milicic Brandt, Maja, 81827 München (DE); Runkler, Thomas, 81929 München (DE); Vaidya, Nishtha, 560100 Bangalore (IN)
(74) Representative: Siemens Patent Attorneys

(57) **Abstract**

A semantic model shall be completed or corrected in a comfortable way. Therefore, there is provided a method of generating a semantic model of a technical process or technical unit including the step of preparing (S1) a data model structure of the technical process or technical unit. An artificial intelligence unit determines (S2) a data element, whereby the data model structure is input into the artificial intelligence unit. The semantic model is generated by incorporating the data element into the data model structure.

## Description

The present invention relates to a method of generating a model of a technical process or technical unit including the step of preparing a data model structure of the technical process or unit. Furthermore, the present invention relates to a device for generating a model of a technical process or technical unit. Additionally, the present invention relates to a computer program and a computer-readable storage medium.

Independent of the grammatical term usage, individuals with male, female or other gender identities are included within the term.

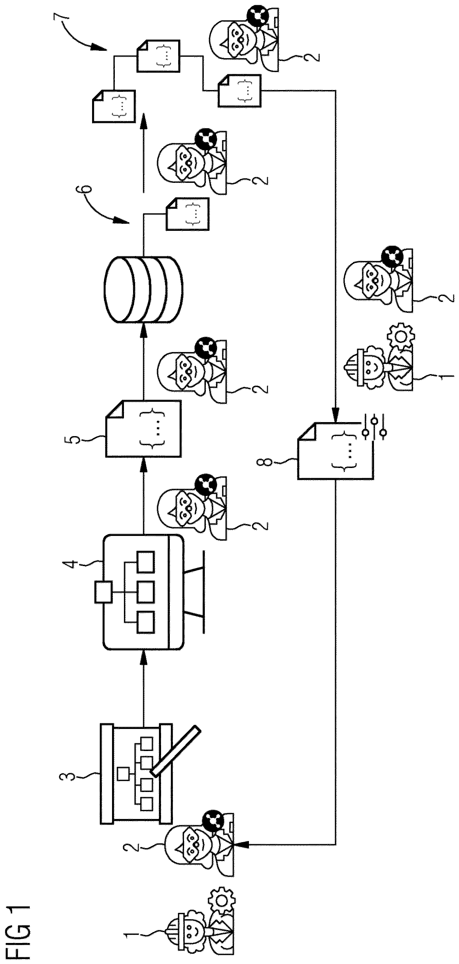

A current process of Semantic modelling (shown in FIG 1) begins with domain experts 1 and whiteboard 2 together with Business stakeholder insights ideating and coming up with a sketch of expected data model and its required features on a whiteboard 3. The data engineer 2 then converts drawing into a diagram 4 manually by using tools like Draw.io and further converted to specification 5 using some templates like Visual Studio code-plugins, custom created by the data engineer 2. Then based on the requirements received initially the data engineer 2 manually aligns 6 the specification 5 to upper ontologies or standards using tools for example Protégé and further might require converting into other specifications based on downstream requirements which is done manually. Finally, the specifications (data model) are reviewed 7 and evaluated by the data engineer 2with inputs from the domain expert 1 and the process is iterated till a final model 8 is reached with expected features.

The challenges in semantic modelling include enabling efficient communication and decision making between Subject Matter Experts and experts in Semantic Modelling, ensuring the quality and accuracy of ontologies, addressing the heterogeneity and scalability of linked data sources, handling the complexity of knowledge graph construction and maintenance, and integrating semantic data with existing systems and workflows.

In traditional semantic modelling approaches - such as conceptual modelling on whiteboards or in Draw.io, UML-modelling in MagicDraw, database modelling in various SQL-modelling environments, ontology modelling in Protégé, modelling along proprietary modelling formalisms, there are several challenges that need to be addressed. These challenges include:
1. Repetitive tasks: Traditional approaches often involve manual and repetitive tasks, such as mapping and transforming data between different formalisms. These tasks can be time-consuming and error-prone.
2. Difficulties in addressing the needs of various stakeholders: Different stakeholders - business decision makers, domain engineers, data engineers - may have different requirements and perspectives when it comes to semantic modelling, generating the need for semantic modelling on different levels of abstraction (see Figure 1) Traditional approaches may struggle to effectively address these diverse needs and keep the various abstraction levels for one domain in sync.
3. Accessibility to data: Traditional approaches may face challenges in accessing and retrieving data from different sources. This can lead to incomplete or insufficient information during the transformation process.
4. Capturing proprietary data schemas: Many organizations have proprietary data schemas that are not easily captured or integrated into traditional semantic modelling approaches such as ontologies. This can result in difficulties in incorporating proprietary data into the overall data model.
5. Serializing existing conceptual models: for many domains and their standards, formal ontologies have been established, such as for instance for ECLASS. However, operationalizing them into specific serializations, code and APIs, is a non-trivial, manual task for which there are very few supporting mechanisms in place. This increases the threshold for Software Architects to re-use the knowledge that is captured in these conceptual models in their code and thus make it more interoperable.
6. Unification of data formats: Traditional approaches may struggle to unify data formats for different applications. This can make it challenging to use the same data across multiple systems or applications.
7. Missing information, time, and support: Traditional approaches may lack the necessary tools, resources, and support to efficiently handle missing information, which is common in real-world semantic modelling scenarios. This can lead to delays and inefficiencies in the overall process.
8. Knowledge Acquisition: Gathering and capturing domain-specific knowledge from experts or existing resources can be a complex and time-consuming task. It requires a deep understanding of the domain and the ability to abstract and represent the knowledge in a formal ontology.
9. Interaction and interconversion: Traditional approaches may not provide effective mechanisms for interaction and interconversion between different formalisms, data models or modes of communication (code vs diagrams). This can hamper the efficiency of the modelling process between Subject Matter experts and experts in Semantic Modelling, reduce scalability of modelling efforts, and hinder the seamless integration and interoperability of data across different systems.
10. Alignment to upper ontologies: Traditional approaches may not have robust mechanisms for aligning data to upper ontologies. This can limit the ability to leverage existing knowledge and ontological frameworks.
11. Downstream data processing: Traditional approaches may not adequately address the challenges associated with downstream data processing, such as data integration, analytics, and visualization.
12. Asset transfer and interoperability: Traditional approaches may not effectively handle the transfer of data assets between different systems or organizations. This can result in data loss or inconsistencies during the transfer process.
13. Polyglot modelling: Traditional approaches may have limitations in handling polyglot modelling, which involves using multiple data modelling techniques or languages within a single system or application. This can make it challenging to represent and integrate diverse types of data.
14. Metaverse/Digital Twin: Traditional approaches may struggle to meet the requirements of semantic modelling required to realise Metaverse or Digital Twin. This can limit the ability to capture and represent complex real-world phenomena.

Overall, these challenges highlight the need for more advanced and innovative approaches to semantic modelling that can address these limitations and provide more efficient and effective solutions.

Tooling and Methodologies: Choosing the right ontology engineering tools and methodologies can be a challenge. There are various tools and methodologies available, each with its own strengths and limitations. Selecting the appropriate ones that align with the project's requirements and resources can be a complex decision with traditional approaches. It requires a combination of domain expertise, collaboration with stakeholders, continuous iteration and improvement, and leveraging best practices and standards in ontology engineering.

Large Language Models (LLM)/ and Large Multimodal models (LMM) can be a solution to these problems, but cannot be used as is, especially by target stakeholders as it requires the models to be customised for the modelling formalisms that need to be supported and ideally also the domain to be modelled. Moreover, the different needs of stakeholders also need to be satisfied
- volume of data to be processed, type of abstraction and modality changing, finding best model, evaluating outputs, deployment needs etc.

Current solutions in the field of semantic modelling address the mentioned challenges in various ways and across a landscape of tools that do not interact with each other very well, making it difficult to move from one level of abstraction to another within the same domain. Here are some examples:
1. Conceptual modelling: whiteboards, Draw.io, MS Visio, MagicDraw (UML) - all with their own, proprietary, or de facto-proprietary way of denoting classes, properties and relations
2. Ontology Engineering: Protégé, Texteditor, Metaphacts which do not or only partly offer the visual exploration of an ontology by means of diagrams or graphs.
3. Validation of logical data models: json-validation, Swagger API templates, which do not allow for semantic validation to the same degree as ontologies formulated in Protégé would offer.
4. Logical data modelling: Visual studio code plug-in to generate JSON-schemas based on the Anchor modelling paradigm; SQL-based database design tools to create logical data models based on the relational modelling paradigm, Mendix, a low-code platform used in semantic modelling to develop and deploy data-driven applications. It provides tools for data integration, modelling, transformation, visualization, and governance. Mendix simplifies application development by minimizing the need for coding and accelerating the development process.
5. None of these tools allow for connecting the logical data models with relevant upper ontologies or conceptual models in a straightforward way.
6. Ontology alignment and ontology matching: Methods do exist, but they are specific to use case, might not be accessible to all stakeholders and do not account for other SDE tasks and might not always generate outputs that are in formats and at the level of abstraction expected by the user.

These solutions are not exhaustive, and there are numerous other tools, frameworks, and approaches available in the market to address the challenges mentioned. The choice of solution depends on the specific requirements, preferences, and constraints of the data engineering project. However, what is common to all these approaches is that they consist of a fragmented tool landscape which require large amounts of customisations, involve a lot of manual efforts, and come with high technical complexity and a steep learning curve for the users.

The object of the present invention is to establish a semantic model of a technical process or technical unit more efficiently.

According to the present invention, this object is solved by a method and a device according to the independent claims. Furthermore, a computer program and a computer-readable storage medium are provided. Further favorable developments are defined in the subclaims.

In one aspect there is provided a method of generating a semantic model of a technical process or a technical unit. The technical unit may be an entity of the technical process (In the following, the terms "technical process" and "technical unit" are referred to simply as "technical process".). The method may be computer-implemented method. The semantic model is a meta data model that contains physical database objects that are abstracted and modified into logical dimensions. The semantic model may be designed to present data for analysis according to the structure of a respective business. The technical process may be an industrial process, e.g. including the operation of a robot.

The method includes the steps of preparing a data model structure of the technical process (based on a data element). The data model structure may represent the functional coherence of technical units used for the technical process. The data model structure may be based on one or more data elements. For instance, the data model structure provides for the use of a mixer. A speed must be assigned to the mixer. The speed is only known for a first recipe. However, the speed in unknown for a second recipe which shall form the basis of the semantic model.

In a further step of the model, the data element is determined by an artificial intelligence unit, whereby the data model structure is input into the artificial intelligence unit. This means that the artificial intelligence unit is fed with data representing the data model structure, but the one or more data elements are missing. Therefore, the artificial intelligence unit determines that the one or more missing data elements.

In a subsequent step, the data element or data elements determined by the artificial intelligence unit is incorporated into the data model structure, thereby (automatically) generating the semantic model. Referring to the above example, the speed of the mixer is determined by the artificial intelligence unit. A respective speed value is incorporated into the data model structure in order to obtain the semantic model of the mixer including the appropriate speed. Thereby, the data model structure may include one or more situational parameters like any information about the material to be mixed. The artificial intelligence unit will propose an appropriate speed for mixing the specific material. Thus, the semantic model can be generated easily, even if one or more data elements are missing or have to be adapted.

According to a specific embodiment, the data element is a parameter of the data model structure. For example, the parameter is a speed, a temperature, a voltage or any other physical value. The semantic model may be established by using a specific parameter value as the data element for instance.

Alternatively, the data element is a relation of at least two components of the data model structure. The components may be physical units or abstract units. For example, the characteristic curve of an electromagnetic device describes the functional relation between the input voltage and the output force. The input parameter (here the voltage value) is the first component, and the output parameter (here the force value) is the second component. The data element for the data model structure may be the characteristic relation between the two components.

In a specific further development, the relation is represented by a graph which is incorporated as the data element into the data model structure. This means that the graph represents the relation between at least two components of the data model structure. Specifically, two components of the data model structure may be defined as nodes, and the relation between the nodes can be represented as edges of the graph.

According to another preferable embodiment, the data model structure is represented by multimodal data input into the artificial intelligence unit. For example, the data model structure may be represented by a drawing prepared manually and a further specification available by language data. Thus, the data model structure is described in two different modalities (drawing and language).

In a further embodiment, the artificial intelligence unit comprises a Large Language Model and/or a Large Multimodal Model. The Large Language Model (LLM) is a type of artificial intelligence (Al) program that can recognize and generate text. For example, it can generate a missing data element from text input. Analogously, the Large Multimodal Model (LMM) is an AI model that can understand and process different forms of input like pictures, videos and audios. These various modalities are input/output data for the Al model. The models are generative models which generate the data element(s) for the semantic model.

According to a further embodiment, the LLM or LMM is trained specifically with data referring to the technical field of the technical process. Thus, the artificial intelligence unit is trained specifically for its technical use. For example, the artificial intelligence unit which shall determine a parameter value of a mixer should be trained in the field of mixing devices. The technical field is any technical area in which the specific technical process is used or implemented.

According to another embodiment, the generated semantic model is presented by a user interface for editing. In this case, the generated semantic model may be a proposal to be edited by a user. For example, the user has to check the generated semantic model. The user interface enables the user to adapt the semantic model.

According to a further embodiment, an original data element of the model structure is replaced by the data element determined by the artificial intelligence unit when incorporating the data element into the model structure. Thus, the inventive method of generating the semantic model cannot only be used for completing a data model structure in order to obtain the semantic model, but the method can also be used for improving the generated semantic model. For such improvement, the artificial intelligence unit determines a data element which is already implemented in the data model structure. Thus, the original data element can be replaced by the data element newly determined by the artificial intelligence unit.

In a further embodiment, specific context data is regarded when determining the data element by the artificial intelligence unit. In this case, the specific context data is input into the artificial intelligence unit beside the data model structure. Thus, the artificial intelligence unit can utilize both, the data model structure and the context data in order to find an appropriate data element. Such a context data may be the ambient temperature. Thus, in the example of the mixer, the mixing speed can be adapted to the ambient temperature or the temperature of the material to be mixed.

In a preferred embodiment, the artificial intelligence unit automatically incorporates the data element into the data model structure. Thus, the artificial intelligence unit not only determines the data element which shall supplement the data model structure or which shall be adapted, but it also incorporates the determined data element into the data model structure automatically. This means that the artificial intelligence unit automatically completes or optimizes the data model structure or semantic model, respectively.

In a further embodiment, the semantic model is generated by the artificial intelligence unit and output as UML diagram (unified modelling language). This modelling language is normed in ISO/IEC 19505. Thus, the semantic model can be easily processed further.

There also may be provided a method of controlling a technical process including a method of generating a semantic model of the technical process as described above, wherein the controlling of the technical process is performed on the basis of a controlling value provided by the semantic model. This means that a robot or another technical device uses the semantic model to control its operation. The controlling may be performed by a controller including one or more processors.

The above object is also solved by a device for generating a semantic model of a technical process (industrial robot), the device comprising recording means designed for recording a data model structure (representing a functional coherence of technical units) of the technical process (based on a data element), an artificial intelligence unit designed for determining the data element in dependence of the data model structure and generating means designed for (automatically) generating the semantic model by incorporating the data element into the data model structure.

The recording means may include any device for preparing the data model structure like a white board or a computer drawing tool.

The artificial intelligence unit may include a calculating device like a computer having one or more processors. Furthermore, the artificial intelligence unit may be based on a neural network, a vector machine or the like. Specifically, the artificial intelligence unit may include a LLM or a LMM. The generating means may also include a calculating device like a computer having one or more processors. Specifically, the generating means may be integrated into the artificial intelligence unit.

The advantages and further developments of the inventive method apply for the inventive device analogously. Thus, respective features of the method can be regarded as functional features of the device.

Furthermore, there may be provided a computer program comprising instructions which, when the program is executed by the above device, cause the device to carry out the method described above. Additionally, there may be provided a computer-readable storage medium comprising instructions which, when executed by the above device, cause the device to carry out the method described above.

The present invention is described in more detail along with the attached drawings showing in:
- FIG 1: an approach to semantic model according to the prior art; and
- FIG 2: a block diagram of a method for semantic model according to the present invention.

The following embodiments represent favorable examples of the present invention.

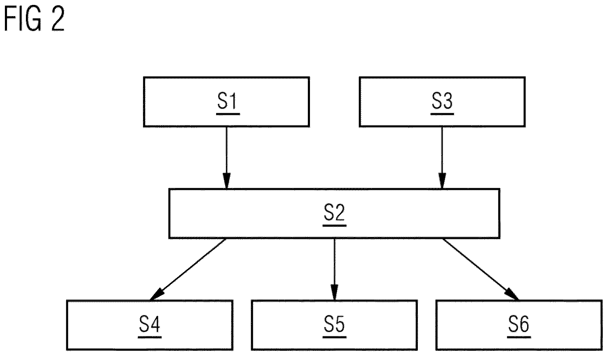

FIG 2 shows a specific embodiment of a method according to the present invention. In a first step S1, a data model structure is prepared. The data model structure may be prepared manually, e.g. on a white board. Optionally, the data model structure is further processed, for example, as shown in FIG 1. Specifically, the manual drawing may be digitized in order to obtain a digital diagram for further automatic processing.

The data model structure will be the basis for generating a respective semantic model. For instance, such a semantic model is used for controlling a robot. The robot retrieves all necessary data from the semantic model. Specifically, the robot needs distance data when acting in the presence of persons. The semantic model may provide distance values that must be complied with.

Another embodiment may relate to a technical process involving an oven. In step S1, the data model structure of the technical process including a heating up of the oven can be prepared. However, a specific set point of the temperature for the intended process is not available. Therefore, the data model structure is prepared without a specific temperature value for the temperature set point. The temperature set point will be determined as data element for the data model structure in next step S2.

Generally, the data element is determined in step S2 by an artificial intelligence unit. The artificial intelligence unit may include a LLM or a LMM. The data model structure is input into the artificial intelligence unit for determining the data element. In one embodiment, this determination of the data element is only made on the basis of the data learned by the AI unit.

Optionally, context data may be provided in step S3. Context data relate to the specific situation the technical process is used in. For example, the oven of the above example shall be used for curing a plastic. Thus, context data may include "curing of a casting resin". Thus, the AI unit processes the data model structure together with context data in order to determine the data element (e.g. the temperature set point).

Once the data model structure is available from step S1 and the data element is available from step S2, the semantic model may be generated by incorporating the data element into the data model structure. Such generation of the semantic model may be performed in different ways. Steps S4, S5 and S6 show different versions of (automatically) generating the semantic model. Preferably, the semantic model is generated automatically.

In the first version according to step S4, the incorporation of the data element into the data model structure represents a supplement or completion of the data model structure. This means that the data model structure did not include the data element (e.g. set point or relation). The specific data element completes the data model structure to obtain the semantic model.

In the second version according to step S5, the incorporation of the data element into the data model structure represents a correction. This means that the data model structure includes a default data element which is replaced by the data element determined by the AI unit.

In the third version according to step S6, the incorporation of the data element into the data model structure represents an adaptation to a specific context. For example, the data model structure includes a mixer speed for mixing beer ingredients. The semantic model shall be adapted to the mixing of yeast dough. Thus, the AI unit will determine on the basis of context data related to the mixing of yeast dough the proper mixing speed as the data element for the data model structure. Thus, the semantic model is adapted to the context in step S6.

The semantic model may be used for controlling a technical process. For example, the semantic model adapted to mix yeast dough is provided to an automated mixer which receives the appropriate mixing speed from the semantic model.

## Claims

1. Method of generating a semantic model of a technical process or a technical unit including the steps of
- preparing (S1) a data model structure of the technical process or technical unit,
**characterized by**
- determining (S2) a data element by an artificial intelligence unit, whereby the data model structure is input into the artificial intelligence unit and
- generating (S4, S5, S6) the semantic model by incorporating the data element into the data model structure.

2. Method according to claim 1, wherein the data element is a parameter of the data model structure.

3. Method according to claim 1, wherein the data element is a relation of at least two components of the data model structure.

4. Method according to claim 3, wherein the relation is represented by a graph which is incorporated as the data element into the data model structure.

5. Method according to one of the preceding claims, wherein the data model structure is represented by multimodal data input into the artificial intelligence unit.

6. Method according to one of the preceding claims, wherein the artificial intelligence unit comprises a Large Language Model and/or a Large Multimodal Model.

7. Method according to claim 6, wherein the Large Language Model or Large Multimodal Model is trained specifically with data referring to the technical field of the technical process or technical unit.

8. Method according to one of the preceding claims, wherein the generated semantic model is presented by a user interface for editing.

9. Method according to one of the preceding claims, wherein an original data element of the data model structure is replaced by the data element determined by the artificial intelligence unit when incorporating the data element into the model structure.

10. Method according to one of the preceding claims, wherein specific context data is regarded (S3) when determining the data element by the artificial intelligence unit.

11. Method according to one of the preceding claims, wherein the artificial intelligence unit automatically incorporates the data element into the data model structure.

12. Method according to one of the preceding claims, wherein the semantic model is generated by the artificial intelligence unit and output as UML diagram.

13. Method of controlling a technical process or technical unit including a method of generating a semantic model of the technical process or technical unit according to one of the preceding claims, wherein the controlling of the technical process or technical unit is performed on the basis of a controlling value provided by the semantic model.

14. Device for generating a semantic model of a technical process or technical unit, the device comprising
- recording means (3) designed for recording a data model structure of the technical process or technical unit,
**characterized by**
- an artificial intelligence unit designed for determining a data element in dependence of the data model structure and
- generating means designed for generating the semantic model by incorporating the data element into the data model structure.

15. Computer program or Computer-readable storage medium comprising instructions which, when executed by a device according to claim 14, cause the device to carry out the method according to one of the claims 1 to 13.
